# EUROPÄISCHE PATENTANMELDUNG

(11) **EP 2 045 510 A2**
(43) Veröffentlichungstag der Anmeldung: **08.04.2009**
(21) Anmeldenummer: 08003071.1
(22) Anmeldetag: 20.02.2008
(51) Int. Cl.: F21S 8/00, F21V 23/04, F21Y 101/02, F21Y 113/00

(54) **Bewegungsgesteuerte Leuchte und Leuchtenanordnung**

(30) Priorität: 03.10.2007 AT 15602007
(71) Anmelder: Hierzer, Andreas, 8010 Graz (AT)
(72) Erfinder: Hierzer, Andreas, 8010 Graz (AT)
(74) Vertreter: Margotti, Herwig Franz

(57) **Zusammenfassung**

Eine Leuchte (1) umfasst zumindest ein Hauptleuchtmittel (3) und zumindest ein Nebenleuchtmittel (4). Das Hauptleuchtmittel (3) ist für Dauerbetrieb vorgesehen. Das Nebenleuchtmittel (4) wird von einem Bewegungssensor (5) gesteuert, der es bei Detektion einer Bewegung aktiviert. Vorzugsweise ist der Bewegungssensor (5) in die Leuchte (1) integriert. Es ist weiters bevorzugt, das zumindest eine Nebenleuchtmittel (4) als LED-Leuchte auszubilden.

## Beschreibung

Die Erfindung geht aus von einer Leuchte mit zumindest einem Hauptleuchtmittel und zumindest einem Nebenleuchtmittel.

Verkaufsflächen und Warenauslagen unterliegen aus Umweltschutzgründen mittlerweile in manchen Ländern Beschränkungen für den durchschnittlichen Beleuchtungs-Stromverbrauch pro Flächeneinheit. Dies führt dazu, dass bei der Präsentation von Waren vielfach Abstriche in Kauf genommen werden müssen, indem auf beleuchtungsintensive, aber gleichzeitig hohen Stromverbrauch aufweisende Leuchtmittel verzichtet werden muss und die Warenanbieter zu einer relativ schwachen Ausleuchtung der Verkaufsflächen übergehen. Schwach beleuchtete Verkaufsflächen verringern aber bekanntermaßen die Werbewirksamkeit der Warenpräsentation und beeinträchtigen auch die Kunden bei der Warenauswahl.

Es ist somit Aufgabe der Erfindung, eine Leuchte anzugeben, welche einerseits eine zufriedenstellende Ausleuchtung von Verkaufsflächen für den Kunden bietet und andererseits den Vorgaben für eine maximale Beleuchtungs-Stromstärke von Verkaufsflächen genügt.

Diese Aufgabe wird durch eine Leuchte mit den Merkmalen des Anspruchs 1 gelöst. Vorteilhafte Ausgestaltungen der Erfindung sind in den Unteransprüchen dargelegt.

Die erfindungsgemäße Leuchte weist zumindest ein Hauptleuchtmittel, z.B. eine Halogenleuchte oder LED, und zumindest ein Nebenleuchtmittel sowie zumindest einen Bewegungssensor auf. Der Bewegungssensor aktiviert bei Detektion einer Bewegung das zumindest eine Nebenleuchtmittel. Somit ist das Nebenleuchtmittel dann in Betrieb, wenn sich Kunden im Umgebungsbereich der Leuchte befinden, wird aber wieder ausgeschaltet, wenn die Kunden diesen Umgebungsbereich verlassen. Dadurch kann zwar zeitweise ein höherer Stromverbrauch auftreten, wenn das Nebenleuchtmittel eingeschaltet ist, da es aber auch immer wieder Perioden gibt, in denen das Nebenleuchtmittel ausgeschaltet ist, wird der durchschnittliche Stromverbrauch abgesenkt. Der Bewegungssensor ist vorzugsweise in die Leuchte integriert, die somit als Einheit geliefert und montiert werden kann.

Die Erfindung stellt somit sicher, dass Verkaufsflächen oder Warenauslagen stets zufriedenstellend beleuchtet werden können, solange sich Kunden und Schaulustige im Bereich befinden, die maximal zulässige durchschnittliche Beleuchtungs-Stromstärke aber nicht überschritten wird.

Gemäß einer weiteren Ausführungsform kann der Bewegungssensor auch als Video- oder Wärmebildkamera ausgeführt sein. Alternativ dazu kann der zumindest eine Bewegungssensor in Form einer Lichtschranke ausgeführt sein, wobei vorzugsweise eine Vielzahl von Lichtschranken vorgesehen ist, deren Lichtstrahlen ein Lichtgitter bilden.

Das zumindest eine Nebenleuchtmittel ist bevorzugt als LED-Leuchte ausgebildet. LED-Leuchten zeichnen sich durch eine hohe Lichtausbeute bei günstigem Energieverbrauch aus.

In weiterer Ausgestaltung der Erfindung ist der Bewegungssensor so ausgestaltet, dass er von sich aus, wenn er keine Bewegung detektiert, das zumindest eine Nebenleuchtmittel deaktiviert. Optional kann dies nach Ablauf einer Wartezeitspanne erfolgen, um den Abschaltvorgang für den Kunden weitgehend unbemerkt zu gestalten.

Um den Bewegungssensor von der Versorgungsspannung und den Strömen der Nebenleuchtmittel getrennt zu halten, kann der Bewegungssensor über ein Steuergerät mit dem zumindest einen Nebenleuchtmittel gekoppelt sein. In dieser Ausgestaltung kann weiters die Deaktivierung des Nebenleuchtmittels nach Ablauf einer Zeitspanne - gerechnet von der letzten Bewegungsdetektion des Bewegungssensors - unmittelbar vom Steuergerät veranlasst werden.

Große konstruktive und designerische Freiheiten bezüglich der Anordnung von Bewegungssensor und Steuergerät erreicht man, wenn eine drahtlose Verbindung zwischen dem Bewegungssensor und dem Steuergerät besteht, da keine Leitungen verlegt werden müssen.

In einer besonders zweckmäßigen, weil vielseitigen Ausgestaltung der erfindungsgemäßen Leuchte sind der Bewegungssensor und/oder das Steuergerät über einen Datenbus mit einem Steuercomputer verbunden. Mit dieser Ausgestaltung ist es möglich, Daten über die Einschaltdauern oder Einschalt- und Ausschaltzeitpunkte des zumindest einen Nebenleuchtmittels oder Signale des Bewegungssensors an den Steuercomputer zu übertragen. Geeignete Übertragungsprotokolle zur Datenübertragung im Datenbus sind DMX, Bluetooth oder ähnliches. Die durch den Bewegungssensor detektierten und an die Steuereinheit weitergegebenen Bewegungssignale bzw. die daraus abgeleiteten Ein- und Ausschaltsignale der Nebenleuchtmittel sind somit im Steuercomputer sammelbar, speicherbar und auswertbar, wodurch in einfacher Weise das Verhalten der sich im Bereich der erfindungsgemäßen Leuchte aufhaltenden Personen analysierbar ist. Geeignete Speicherbausteine sind insbesondere EPROMs oder EEPROMs.

Weiterhin kann vorteilhaft vorgesehen sein, dass das zumindest eine Hauptleuchtmittel und/oder das zumindest eine Nebenleuchtmittel als farbveränderliches Leuchtmittel ausgebildet ist, wobei eine Farbveränderung durch den Bewegungssensor aktivierbar ist, was die Kreativität und Flexibilität in Hinblick auf die zu erzielenden Effekte deutlich verbessert.

Das Programmieren und Abspielen von Sequenzen von Abläufen wie Dimmen, Intensitätsveränderung, Farbveränderung, Ein- und/oder Ausschaltverzögerung der Haupt-und/oder Nebenleuchtmittel kann in vorteilhafter Weise zur Akzentuierung bestimmter Waren oder Präsentationsflächen eingesetzt werden.

Der Betrieb des zumindest einen Hauptleuchtmittels im Dauerbetrieb mit einer wählbaren Grundbeleuchtungsstärke sorgt dafür, dass der Kunde die Präsentationsflächen und Waren erkennen und sich gezielt auf diese zu bewegen kann.

Die Ausbildung des zumindest einen Nebenleuchtmittels als sog. Masterleuchtmittel, welches mit zumindest einem weiteren Leuchtmittel, welches als Slaveleuchtmittel ausgebildet und durch das zumindest eine Masterleuchtmittel aktivierbar ist, führt zu raffinierten Beleuchtungseffekten auch bei kleinen und/oder versteckten Präsentationsflächen. Gegebenenfalls kann durch die Verwendung von Fotozellen zur Aktivierung der Slaveleuchtmittel eine Verkabelung entfallen.

Ein weiterer wichtiger Aspekt der vorliegenden Erfindung ist die Bereitstellung einer mehrere erfindungsgemäße Leuchten umfassenden Leuchtenanordnung, die dazu dient Personen innerhalb eines vorgegebenen Bereichs zu führen. Bei diesem Bereich kann es sich beispielsweise um eine Verkaufsfläche handeln. Die erfindungsgemäße Leuchtenanordnung weist zumindest zwei Leuchten und einen Steuercomputer auf, wobei der Steuercomputer Personen mittels der Bewegungssensoren der Leuchten fortlaufend erfasst und anhand ihres Bewegungsverhaltens Nebenleuchtmittel und optional auch Hauptleuchtmittel von Leuchten aktiviert oder deaktiviert. Das erfasste Bewegungsverhalten von Personen umfasst zumindest eines aus Bewegungsrichtung, Geschwindigkeit, Verweildauer und/oder Gesichtsfeldausrichtung. Durch gezieltes Aktivieren/Deaktivieren von Leuchten entlang eines Pfades durch einen von Bewegungssensoren erfassten Bereich werden den Personen "Führungsvorschläge" angeboten, auf die sie nach eigenem Ermessen eingehen können oder nicht.

Die Erfindung wird im Folgenden unter Bezugnahme auf bevorzugte Ausführungsbeispiele in den Figuren näher beschrieben. In den Figuren zeigen:
- Fig. 1: eine schematisierte Darstellung einer erfindungsgemäß ausgestalteten Leuchte,
- Fig. 2: eine detailliertere schematisierte Darstellung der Verschaltung der erfindungsgemäßen Leuchte, und
- Fig. 3: eine schematische, beispielhafte Ausgestaltungsform einer erfindungsgemäß ausgestalteten Leuchte.

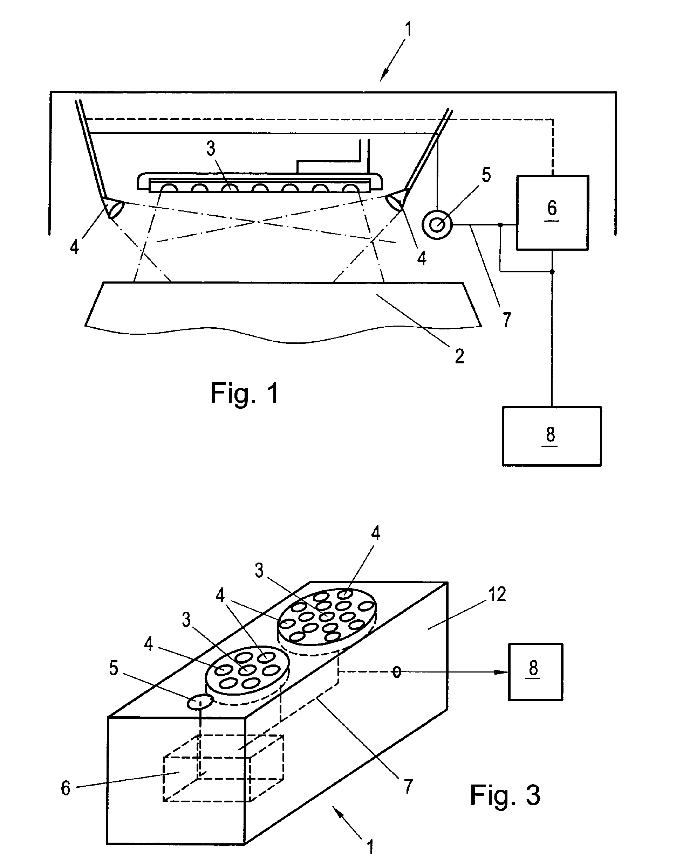

Die in Fig. 1 stark schematisiert dargestellte Leuchte 1 dient der Ausleuchtung einer Präsentationsfläche 2. Die Leuchte 1 umfasst im Ausführungsbeispiel ein längliches Hauptleuchtmittel 3, welches beispielsweise als Reihe von Halogen- oder LED-Leuchten ausgebildet ist, sowie zwei seitlich davon angeordnete Nebenleuchtmittel 4, die als LED-Leuchten ausgeführt sind. Das Hauptleuchtmittel 3 strahlt ein gleichmäßiges Licht aus, welches dauerhaft eingeschaltet bleiben kann, da es deutlich unter einem maximal zulässigen Leistungswert liegt und dabei die Präsentationsfläche 2 ausleuchtet. Die Beleuchtungsstärke der dauerhaften Basisbeleuchtung kann gedimmt werden, beispielsweise werden ca. 20% der Vollbeleuchtungsstärke eingestellt. Die Haupt- und Nebenleuchtmittel 3, 4 können in beliebiger, im Prinzip bekannter Weise angeordnet und montiert sein. Die Lichtkegel der jeweiligen Leuchtmittel sind in der Zeichnung angedeutet.

Ein sich aus der beispielhaften erfindungsgemäßen Anordnung gemäß Fig. 1 ergebender Vorteil ist die Tatsache, dass eine starke Beanspruchung der Hauptleuchtmittel 3 durch häufiges Ein- und Ausschalten unterbleibt.

Die Anzahl und Art der verwendeten Haupt- und Nebenleuchtmittel 3, 4 kann an die jeweiligen Gegebenheiten angepasst werden, indem mehr oder weniger Haupt- und Nebenleuchtmittel 3, 4 sowie unterschiedliche Arten von Leuchtmitteln verwendet werden.

Die Nebenleuchtmittel 4 sind erfindungsgemäß mit einem Bewegungssensor 5 verbunden, welcher in dem in Fig. 1 dargestellten Ausführungsbeispiel separat ausgebildet ist, jedoch auch, wie beispielhaft in Fig. 3 dargestellt, in die Leuchte 1 integriert sein kann. Der Bewegungssensor 5 registriert Bewegungen in seinem Sichtfeld und gibt die detektierten Signale an eine Steuereinheit 6 weiter, welche dann die Nebenleuchtmittel 4 aktiviert und für eine vorbestimmte Zeit, gerechnet vom Auftreten des jeweils letzten Signals des Bewegungssensors 5 aktiviert hält, um sie danach auszuschalten. Alternativ dazu könnte auch der Bewegungssensor 5 selbst dazu ausgebildet sein, die Nebenleuchtmittel 4 bei Detektion einer Bewegung zu aktivieren und, wenn keine Bewegung mehr detektiert wird, nach einer einstellbaren Haltezeit wieder zu deaktivieren. Tritt also eine Person vor eine Warenpräsentationsfläche 2, wird die Bewegung der Person durch den Bewegungssensor 5 registriert und die Zusatzbeleuchtung in Form der Nebenleuchtmittel 4 angeschaltet, so dass die Person vor der Präsentationsfläche 2 diese betrachten kann. Die Nebenleuchtmittel 4 bleiben aktiv, solange die Person vor der Präsentationsfläche 2 verweilt, da ihre Bewegungen durch den Bewegungssensor 5 weiterhin detektiert werden. Verlässt die Person den durch den Bewegungssensor 5 erfassbaren Bereich, erlöschen die Nebenleuchtmittel 4 nach einer wählbaren Zeitspanne. Die Empfindlichkeit des Bewegungssensors 5 ist geeignet wählbar, um Bewegungen in einem bestimmten Umkreis detektieren zu können und so die Ausleuchtung anzupassen, wenn sich eine Person nähert.

In der dargestellten erfindungsgemäßen Leuchte 1 können der Bewegungssensor 5 und das Steuergerät 6 drahtlos oder mittels Kabel miteinander verbunden sein. Der Bewegungssensor 5 kann insbesondere auch in Form einer Video- und/oder Wärmebildkamera ausgebildet oder mit einer solchen gekoppelt sein, um genauere Analysen des Kundenstroms zu ermöglichen.

Weiters können der Bewegungssensor 5 und das Steuergerät 6 über einen Datenbus 7 mit einem Steuercomputer 8 verbunden sein, wobei auch der Bewegungssensor 5 und das Steuergerät 6 miteinander über diesen Datenbus kommunizieren. Mithilfe der Datenbusverbindung zum Steuercomputer 8 ist eine Erfassung, Speicherung und Auswertung der Daten möglich. Die Speicherung der Daten kann beispielsweise in Speicherbausteinen 13 wie EPROMS oder EEPROMS erfolgen. Der Steuercomputer 8 kann bei Verwendung geeigneter Software anhand der empfangenen Signale Auswertungen über die Anzahl von Personen vor der Präsentationsfläche 2, ihre Verweildauer vor der Präsentationsfläche 2 etc. über einen wählbaren Zeitraum durchführen und so durch eine Kundenstromanalyse Aufschluss über Kaufverhalten und -interesse geben. Zur Auswertung eignen sich dabei vor allem die durch die Registrierung der Ein- und Ausschaltzeiten der Nebenleuchtmittel 4 ermittelten Beleuchtungszeiten sowie die Schalthäufigkeit, die Signale des Bewegungssensors 5 und/oder die durch die Video- oder Wärmebildkamera aufgenommenen Bilder.

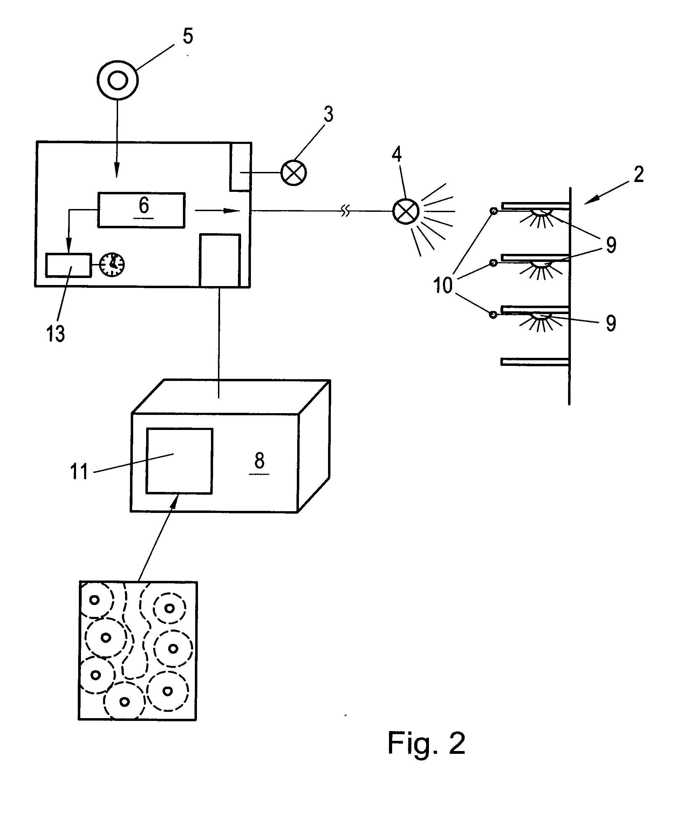

Die Auswertungen können, wie in Fig. 2 detaillierter dargestellt, auf einem geeigneten Ausgabegerät, wie z.B. auf einem Bildschirm 11, angezeigt werden. Beispielsweise kann dargestellt werden, welche Leuchten 1 aktiv sind, wie sich Helligkeitsverteilungen verändern, wo sich Kunden befinden und entlang welcher Wege sie sich bewegen.

Zudem ist es möglich, wie in Fig. 2 rechts stark schematisiert angedeutet, die Nebenleuchtmittel 4 als sog. Master auszubilden und an geeigneten Stellen der Präsentationsfläche 2 (in diesem Fall ein Regal) weitere Leuchtmittel 9 als sog. Slaves anzubringen, welche Slaves beispielsweise mit Fotozellen 10 ausgestattet sind. Fällt Licht aus den Nebenleuchtmitteln 4 auf die Fotozellen 10 der weiteren Leuchtmittel 9, werden diese ebenfalls aktiviert. Die Slaves können dabei in beliebig vielen Ebenen, die jeweils auf Lichteinfall aus der jeweiligen Masterlichtquelle reagieren, angeordnet werden, wodurch kreative und effiziente Ausleuchtungen ermöglicht werden können.

Wie bereits weiter oben angesprochen, können die erfindungsgemäßen Leuchten 1 so ausgebildet sein, dass alle wesentlichen Bestandteile - Hauptleuchtmittel 3, Nebenleuchtmittel 4, Bewegungssensor 5 und Steuergerät 6 - in einem gemeinsamen Gehäuse 12 angeordnet sind, wie schematisch aus Fig. 3 hervorgeht. Beispielsweise können in dem Gehäuse 12 zwei Anordnungen von LEDs vorgesehen sein, von denen eine als Hauptleuchtmittel 4 ansteuerbar ist, während die weiteren LEDs als Nebenleuchtmittel 4 geschaltet sind.

Das Steuergerät 6 ist im Ausführungsbeispiel ebenfalls in dem Gehäuse 12 angeordnet und mit dem Steuercomputer 8 über den Datenbus 7 verbunden. Das Gehäuse 12 kann entsprechend ausgebildet sein, um ein- oder unterbaufähig zu sein und beispielsweise mit einer Fläche wie einer Wand oder einem Teil der Präsentationsfläche 2 bündig abzuschließen.

Eine geeignete Programmierung des Steuergerätes 6 ermöglicht, das zumindest eine Hauptleuchtmittel 3 und/oder das zumindest eine Nebenleuchtmittel 4 in zumindest einer wählbaren Sequenz zu betreiben, wobei diese einen oder mehrere Abläufe wie Dimmen, Intensitätsveränderungen der Leuchtmittel 3 und 4, Farbveränderungen der geeignet gestalteten Leuchtmittel 3 und 4 sowie Ein- und/oder Ausschaltverzögerungen der Leuchtmittel 3 und 4 umfassen kann.

Die beschriebenen Leuchten 1 lassen sich vorteilhaft in einer Leuchtenanordnung betreiben, die zumindest zwei, vorteilhafter Weise aber eine Vielzahl von Leuchten 1 und einen Steuercomputer 8 umfasst. Der Steuercomputer erfasst fortlaufend Personen mittels der Bewegungssensoren 5 der Leuchten 1 und aktiviert/deaktiviert anhand ihres Bewegungsverhaltens Nebenleuchtmittel 4 und optional auch Hauptleuchtmittel 3 von Leuchten 1.

Der Zweck dieser Leuchtenanordnung ist es, aus der erkannten Präsenz von Personen und ihrem Bewegungsverhalten diese Personen mittels der Leuchten 1 zu "führen". Regelgröße ist dabei das Bewegungsverhalten, das nicht nur die Position der Personen umfasst, sondern auch Bewegungsrichtung, Geschwindigkeit, Verweildauer und/oder Gesichtsfeldausrichtung. Die Leuchten 1 können vorteilhaft in Lichtpräsentationseinheiten für Waren etc. angeordnet sein. Betritt eine Person einen von den Bewegungssensoren 5 erfassten Bereich, wie z.B. einen Verkaufsbereich, so wird dies von den Bewegungssensoren 5 erkannt und deren Präsenz an den Steuercomputer 8 gemeldet. Die Person wird fortlaufend betreffend Ihrer Bewegung durch die Verkaufsfläche erfasst und je nach ihrer Bewegung im erfassten Bereich werden kleinere Verkaufseinheiten (z.B. Vitrinen) gezielt beleuchtet. Dadurch wird es z.B. möglich einen Kunden gezielt mittels Licht durch eine Verkaufsfläche zu "führen". Betritt beispielsweise eine Person eine Verkaufsfläche und interessiert sich aufgrund Ihrer Bewegung für ein Produkt A, wird einerseits die Vitrine, in der das Produkt A liegt, beleuchtet und in weiterer Folge als "Führungsvorschlag" Vitrinen oder Flächen, die ähnliche Produkte (gleiches Genre) wie "A" enthalten, beleuchtet. Natürlich ist es nicht nur möglich den Kunden "durch" das Portfolio von Produktkategorie "A" zu führen, vielmehr ist die gezielte Licht-Führung durch die gesamte Verkaufsfläche möglich. Durch die komplexere, redundante Ausführung des Systems der Leuchtenanordnung ist auch das gleichzeitige, unbeeinträchtigte Licht-Führen mehrerer Kunden möglich.
Ein Nebenprodukt dieser Erfindung ist das Vorhandensein einer Fülle von statistisch auswertbaren Daten betreffend den Personenstrom. (Wann betraten wie viele Kunden die Verkaufsfläche? Wohin gingen sie zuerst, wo verweilten sie wie lange?, Wie viele Personen folgen dem Licht-Führungsvorschlag wie lange?)

Es ist in einer ersten Ausführungsform der erfindungsgemäßen Leuchtenanordnung vorgesehen Infrarotkameras als Bewegungssensoren einzusetzen, die im Vergleich zu konventionellen RGB-Kameras ein besseres Erkennungsverhalten bieten und daher einen fehlerminimierten Betrieb erlauben.

In einer ersten Variante erfassen z.B. zwei Infrarotkameras die zu überwachende Fläche. Durch den Abgleich der beiden Kamerawinkel (den Abgleich der weitergeleiteten Videostreams) ist es möglich eine 3-dimensionale Bestimmung der Position der Person vorzunehmen. Durch geeignete in die Regelungssoftware implementierte Routinen ist es auch möglich Gegenstände von Personen zu unterscheiden. So siebt die im Steuercomputer 8 laufende Software Gegenstände (z.B. Vitrinen, Kleiderständer/Schaufensterpuppen und ähnliche leblose Gegenstände effizient aus, indem sie einerseits die Temperatur der Gegenstände überwacht und andererseits deren Kubatur (3-dimensionale Ausformung) mit den Sollwerten einer zu führenden Person vergleicht. Hat die Software aus den Live-stream Bildern eine Person erkannt beginnt die implementierte Führungsarbeit wobei auf das Verhalten der Person durch die Bilder stets geachtet und reagiert wird. Die Person gilt für die Regelung erst als abgeschlossen, wenn sie die Verkaufsfläche verlassen hat oder sich in einer Fläche befindet, für welche keine Lichtregelung vorgesehen ist (z.B. Umkleide/Kasse/Windfang).

In einer zweiten Variante wird die Verkaufsfläche mit einem "Gitter" aus Bewegungssensoren 5, z.B. mit Laserschranken/ oder Infrarotgitter belegt. Wenn eine Person dieses Gitter betritt, wird die daraus resultierende Information ihrer x-y Position an den Steuercomputer 8 übersandt. Aus dieser Information, kombiniert mit den 2-dimensionalen Daten zumindest einer Infrarotkamera lässt sich der in der ersten Variante beschriebene Erkennungsalgorithmus ebenfalls ausführen.

Ist die zu führende Person einmal durch eine der beiden zuvor beschriebenen Varianten erkannt, wird sie als "identifiziertes Objekt" markiert und die Lichtsteuerung schlägt einen geführten Weg durch die Verkaufsfläche vor. Die Person hat selbstverständlich jederzeit die Freiheit, von dieser vorgeschlagenen Route "abzuweichen" (z.B. einen Meter zurückzugehen) und erhält natürlich trotzdem die volle Ausleuchtung im Bereich ihres Blickwinkels.

## Patentansprüche

1. Leuchte (1), zumindest ein Hauptleuchtmittel (3), insbesondere eine Halogenleuchte oder LED-Leuchte, und zumindest ein Nebenleuchtmittel (4) umfassend, **gekennzeichnet durch** zumindest einen Bewegungssensor (5), der bei Detektion einer Bewegung das zumindest eine Nebenleuchtmittel (4) aktiviert.

2. Leuchte nach Anspruch 1, **dadurch gekennzeichnet, dass** der Bewegungssensor (5) in die Leuchte (1) integriert ist.

3. Leuchte nach Anspruch 1 oder 2, **dadurch gekennzeichnet, dass** der zumindest eine Bewegungssensor (5) in Form einer Video- oder Wärmebildkamera ausgeführt ist.

4. Leuchte nach einem der vorhergehenden Ansprüche, **dadurch gekennzeichnet, dass** der zumindest eine Bewegungssensor (5) in Form einer Lichtschranke ausgeführt ist, wobei vorzugsweise eine Vielzahl von Lichtschranken vorgesehen ist, deren Lichtstrahlen ein Lichtgitter bilden.

5. Leuchte nach einem der vorhergehenden Ansprüche, **dadurch gekennzeichnet, dass** das zumindest eine Nebenleuchtmittel (4) als LED-Leuchte ausgebildet ist.

6. Leuchte nach einem der vorhergehenden Ansprüche, **dadurch gekennzeichnet, dass** das zumindest eine Nebenleuchtmittel (4) durch den Bewegungssensor (5), wenn er keine Bewegung detektiert, optional nach Ablauf einer Zeitspanne, deaktivierbar ist.

7. Leuchte nach einem der vorhergehenden Ansprüche, **dadurch gekennzeichnet, dass** der Bewegungssensor (5) über ein Steuergerät (6) mit dem zumindest einen Nebenleuchtmittel (4) gekoppelt ist.

8. Leuchte nach Anspruch 7, **dadurch gekennzeichnet, dass** das Steuergerät (6) das zumindest eine Nebenleuchtmittel (4) nach Ablauf einer Zeitspanne - gerechnet von der letzten Bewegungsdetektion des Bewegungssensors (5) - deaktiviert.

9. Leuchte nach Anspruch 7 oder 8, **dadurch gekennzeichnet, dass** eine drahtlose Verbindung zwischen dem Bewegungssensor (5) und dem Steuergerät (6) besteht.

10. Leuchte nach einem der vorhergehenden Ansprüche, **dadurch gekennzeichnet, dass** der Bewegungssensor (5) und/oder das Steuergerät (6) über einen Datenbus (7), insbesondere über ein LAN, mit einem Steuercomputer (8) verbunden sind.

11. Leuchte nach Anspruch 10, **dadurch gekennzeichnet, dass** das die Daten über den Datenbus (7) übertragende Protokoll DMX, Bluetooth oder ein ähnliches geeignetes Protokoll ist.

12. Leuchte nach Anspruch 10 oder 11, **dadurch gekennzeichnet, dass** Daten über die Einschaltdauern und/oder Einschalt- und Ausschaltzeitpunkte des zumindest einen Nebenleuchtmittels (4) und/oder Signale des Bewegungssensors (5) an den Steuercomputer (8) übertragbar und in diesem in einem geeigneten Speicherelement (13), insbesondere in einem EPROM oder einem EEPROM, speicherbar sind.

13. Leuchte nach einem der Ansprüche 10 bis 12, **dadurch gekennzeichnet, dass** die Daten der Einschaltdauern und/oder der Einschalt- und Ausschaltzeitpunkte des zumindest einen Nebenleuchtmittels (4) und/oder die Signale des Bewegungssensors (5) und/oder die durch die Video- oder Wärmebildkamera aufgenommenen Bilder mittels geeigneter Programme auswertbar und auf einem Ausgabegerät, insbesondere auf einem Bildschirm des Steuercomputers (8), anzeigbar sind.

14. Leuchte nach einem der vorhergehenden Ansprüche, **dadurch gekennzeichnet, dass** das zumindest eine Hauptleuchtmittel (3) und/oder das zumindest eine Nebenleuchtmittel (4) als farbveränderliches Leuchtmittel ausgebildet ist, wobei eine Farbveränderung durch den Bewegungssensor (5) aktivierbar ist.

15. Leuchte nach einem der vorhergehenden Ansprüche, **dadurch gekennzeichnet, dass** das zumindest eine Hauptleuchtmittel (3) und/oder das zumindest eine Nebenleuchtmittel (4) in zumindest einer wählbaren Sequenz betreibbar sind.

16. Leuchte nach Anspruch 15, **dadurch gekennzeichnet, dass** die zumindest eine Sequenz einen oder mehrere der folgenden Abläufe umfasst: Dimmen, Intensitätsveränderung, Farbveränderung, Ein- und/oder Ausschaltverzögerung.

17. Leuchte nach einem der vorhergehenden Ansprüche, **dadurch gekennzeichnet, dass** das zumindest eine Hauptleuchtmittel (3) im Dauerbetrieb mit einer wählbaren Grundbeleuchtungsstärke betreibbar ist.

18. Leuchte nach einem der vorhergehenden Ansprüche, **dadurch gekennzeichnet, dass** das zumindest eine Nebenleuchtmittel (4) als Masterleuchtmittel ausgebildet ist.

19. Leuchte nach Anspruch 18, **dadurch gekennzeichnet, dass** zumindest ein weiteres Leuchtmittel (9) vorgesehen ist, welches als Slaveleuchtmittel durch das zumindest eine Masterleuchtmittel aktivierbar ist.

20. Leuchte nach Anspruch 19, **dadurch gekennzeichnet, dass** die Aktivierung des zumindest einen weiteren Leuchtmittels (9) mittels zumindest einer mit dem weiteren Leuchtmittel (9) verbundenen Fotozelle (10) erfolgt.

21. Leuchtenanordnung mit zumindest zwei Leuchten (1) nach einem der vorhergehenden Ansprüche, **dadurch gekennzeichnet, dass** ein Steuercomputer (8) dazu ausgebildet ist, Personen mittels der Bewegungssensoren (5) der Leuchten (1) fortlaufend zu erfassen und anhand ihres Bewegungsverhaltens Nebenleuchtmittel (4) und optional auch Hauptleuchtmittel (3) von Leuchten (1) zu aktivieren oder deaktivieren.

22. Leuchtenanordnung nach Anspruch 21, **dadurch gekennzeichnet, dass** das Bewegungsverhalten von Personen zumindest eines aus Bewegungsrichtung, Geschwindigkeit, Verweildauer und/oder Gesichtsfeldausrichtung umfasst.

23. Leuchtenanordnung nach Anspruch 21 oder 22, **dadurch gekennzeichnet, dass** der Steuercomputer (8) dazu ausgebildet ist, Personen mittels Aktivieren/Deaktivieren von Leuchten (1) entlang eines Pfades durch einen von Bewegungssensoren (5) erfassten Bereich zu führen.
